# EUROPÄISCHE PATENTANMELDUNG

(11) **EP 2 068 143 A1**
(43) Veröffentlichungstag der Anmeldung: **10.06.2009**
(21) Anmeldenummer: 07023765.6
(22) Anmeldetag: 07.12.2007
(51) Int. Cl.: G01N 30/08, G01N 1/40, G01N 35/00, B03C 1/01

(54) **Manipulation magnetischer Mikropartikel in einem Hochdruck-Flüssigkeitssystem und Extraktionsprozess**

(71) Anmelder: Roche Diagnostics GmbH, 68305 Mannheim (DE); F.HOFFMANN-LA ROCHE AG, 4070 Basel (CH); Ludwig-Maximilians-Universität München, 80359 München (DE)
(72) Erfinder: Vogeser, Michael, 81375 Muenchen (DE)

(57) **Zusammenfassung**

Gegenstand der Erfindung ist eine Vorrichtung und ein Verfahren zur Manipulation von einem flüssigen Probenmaterial und darin suspendierten magnetischen Mikropartikeln, an deren funktionalisierter Oberfläche Analyten gebunden sind. Das Probenmaterial wird durch eine Injektionsvorrichtung (50) in ein Flüssigkeitssystem eingebracht und von einer ersten mobilen Phase (65) einem Extraktor (90) zugeführt. Die Mikropartikel werden im Extraktor (90) in einem ersten Abschnitt (97a) durch ein Magnetfeld einer steuerbaren Vorrichtung (96) immobilisiert und vom übrigen Probenmaterial getrennt. Durch Umschalten einer Schalteinheit (110) wird in den Extraktor (90) eine zweite mobile Phase (75) geleitet, die die adsorbierten Analyten von der Oberfläche der Mikropartikel löst. Die Mikropartikel werden in einem zweiten Abschnitt (97b) der steuerbaren Vorrichtung (96) immobilisiert und die in der zweiten mobilen Phase (75) gelösten Analyten können mittels chromatographischer Trennung (130) und anschliessender Detektion (140) nachgewiesen werden.

## Beschreibung

Die vorliegende Erfindung beschäftigt sich mit der Automatisierung von Extraktionsprozessen mittels magnetischer Mikropartikel mit funktionalisierter Oberfläche.

### Hintergrund

Für einen Großteil in-vitro diagnostischer Untersuchungen ist es erforderlich, einen oder mehrere Zielanalyten aus komplexen Probenmaterialien (Serum, Plasma, Vollblut, Urin etc.) zu extrahieren. Hierbei werden die jeweiligen Zielanalyte durch unterschiedliche Verfahren angereichert, während Komponenten der Probenmatrix, die die nachfolgende Analyse behindern würden (z. B. Proteine, Peptide, Salze), abgereichert werden. Folgende Extraktionsverfahren werden bislang für die Anreicherung von Zielanalyten eingesetzt: Proteinfällung mit organischen Lösungsmitteln oder Säuren; flüssig-flüssig Extraktion (solvent extraction) mit einem Evaporationsschritt; Festphasen-Extraktion an Kartuschen, die Partikel mit definierten Oberflächenstrukturen beinhalten (vor allem kohlenwasserstofffunktionalisierte Silica-Partikel; solid phase extraction, SPE).

Aus dem Stand der Technik bekannte Extraktionsverfahren sind mit einem hohen manuellen Arbeitsaufwand verbunden. Verfahren zur Automatisierung solcher Extraktionsprozesse sind bislang technisch aufwändig und weisen zahlreiche Nachteile auf. Sie erfordern einerseits anspruchsvolle mechanische Konstruktionen, z. B. Pipettiersysteme und/oder Vakuumsysteme. Andererseits besteht für bekannte Verfahren ein hoher Bedarf an festen und flüssigen Verbrauchsmaterialien, z. B. Extraktionskartuschen, Extraktionsplatten, Lösungsmittel. Darüber hinaus erfordern sie eine lange Bearbeitungsdauer und sind charakterisiert durch geringen Probendurchsatz und begrenzte Serienlängen.

Ein wichtiges Ziel der Arbeiten zur vorliegenden Erfindung ist es gewesen, ein Extraktionssystem zu entwickeln, das in Kombination mit einem Trenn- und Analysesystem ein weitgehend geschlossenes System bildet. Mit dem erfindungsgemäßen Flüssigkeitssystem, das bevorzugt ein Hochdruck-Flüssigkeitssystem ist, werden die Limitierungen gegenwärtig vorhandener automatisierter Extraktionsprozesse überwunden.

### Zusammenfassung der Erfindung

Ein erster Aspekt der Erfindung ist eine Vorrichtung mit einem Flüssigkeitssystem (FS), umfassend Mittel zur Herstellung fluidischer Verbindungen (30), einen ersten und einen zweiten Einlass (10, 20), mindestens ein Druckerzeugungsmittel (40), eine Injektionsvorrichtung (50), zwei Vorratsbehälter (60, 70) für eine erste und eine zweite mobile Phase (65, 75) mit flüssigem Aggregatzustand, ein Auffanggefäß (80), einen Extraktor (90), einen Auslass (100) und ein Mittel geeignet zur Herstellung von zwei verschiedenen fluiden Verbindungszuständen (Schalteinheit, 110), dadurch gekennzeichnet, dass der erste Einlass (10) so ausgeführt ist, dass dem HFS unter Druck die erste mobile Phase (65) aus dem ersten Vorratsbehälter (60) über eine fluidische Verbindung zuführt werden kann; der erste Einlass (10) weiterhin mit einer Injektionsvorrichtung (50) fluidisch verbunden ist, wobei die Injektionsvorrichtung so ausgeführt ist, dass sie das Einbringen einer Mischung (120) aus flüssigem Probenmaterial (121) und darin suspendierten Mikropartikeln (122) in die durch den Einlass eingebrachte erste mobile Phase erlaubt; der zweite Einlass (20) so ausgeführt ist, dass dem HFS unter Druck die zweite mobile Phase (75) aus dem zweiten Vorratsbehälter (70) über eine fluidische Verbindung zuführt werden kann; der erste Einlass (10) mit einem ersten Eingang (E1) der Schalteinheit (110) und der zweite Einlass (20) mit einem zweiten Eingang (E2) der Schalteinheit fluidisch verbunden sind; der Extraktor (90) über einen Eingang (91) und einen Ausgang (92) verfügt, wobei der Eingang (91) des Extraktors mit einem ersten Ausgang (A1) der Schalteinheit fluidisch verbunden ist und der Ausgang (92) des Extraktors mit einem dritten Eingang (E3) der Schalteinheit fluidisch verbunden ist; der Extraktor ferner eine fluidisch verbindende Leitung (95) zwischen dem Eingang (91) und dem Ausgang (92) umfasst, ferner eine steuerbare Vorrichtung (96), mit der an zwei oder mehr hintereinander angeordneten Abschnitten (97a, 97b) dieser Leitung zeitweilig ein lokales Magnetfeld angelegt werden kann; der zweite Ausgang (A2) der Schalteinheit (110) der Auslass (100) ist oder fluidisch mit dem Auslass (100) verbunden ist; der dritte Ausgang (A3) der Schalteinheit (110) mit dem Auffanggefäß (80) fluidisch verbunden ist; und die Schalteinheit (110) dazu geeignet ist, im ersten Verbidungszustand (I) E1 und A1, E2 und A2 sowie E3 und A3 fluidisch zu verbinden und im zweiten Verbidungszustand (II) E2 und A1, E3 und A2 sowie E1 und A3 fluidisch zu verbinden.

Ein weiterer Aspekt der Erfindung ist die Verwendung der erfindungsgemäßen Vorrichtung für die Manipulation von magnetischen Mikropartikeln und zwei verschiedenen mobilen Phasen mit flüssigem Aggregatzustand.

Ein Aspekt der Erfindung ist ferner eine Methode zur Darstellung eines gereinigten Analyten aus einem komplexen flüssigen Probenmaterial enthaltend besagten Analyten, umfassend die Schritte (a) Inkontaktbringen des flüssigen Probenmaterials (121) enthaltend den Analyten mit Mikropartikeln (122) aus einem magnetischen oder paramagnetischen Material mit einer funktionalisierten Oberfläche (123), wobei der Analyt an die Oberfläche adsorbiert; gefolgt von (b) Einbringen des Probenmaterials mit den Mikropartikeln in eine erfindungsgemäße Vorrichtung unter Verwendung der Injektionsvorrichtung (50); gefolgt von (c) Einpumpen einer ersten mobilen Phase (65) aus einem ersten Vorratsgefäß (60) in den ersten Einlass (10) der Vorrichtung, wobei die Schalteinheit (110) der Vorrichtung den Verbindungszustand (I) herstellt und im Extraktor (90) an einem ersten Abschnitt (97a) der darin befindlichen Leitung (95) ein Magnetfeld angelegt wird, das geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im ersten Abschnitt (97a) zu immobilisieren; gefolgt von (d) Immobilisieren der Mikropartikel (122) im Extraktor (90) in dem ersten Abschnitt (97a) der Innenwand (93) der Leitung (95); gefolgt von (e) Trennen der Mikropartikel (122) vom übrigen Probenmaterial durch weiteres Einpumpen der ersten mobilen Phase (65) aus dem ersten Vorratsgefäß (60) in den ersten Einlass (10), wobei die immobilisierten Mikropartikel gewaschen werden und das übrige Probenmaterial dem Auffangbehälter (80) zugeführt wird; gefolgt von (f) Umschalten der Schalteinheit (110) in den Verbindungszustand (II) und Einpumpen einer zweiten mobilen Phase (75) aus dem zweiten Vorratsgefäß (70) in den zweiten Einlass (20) der Vorrichtung, wobei die zweite mobile Phase (75) geeignet ist, den adsorbierten Analyten von der Oberfläche der Mikropartikel (122) zu lösen; gefolgt von (g) Eluieren des Analyten durch Inkontaktbringen der Mikropartikel (122) mit der zweiten mobilen Phase (75), wobei gleichzeitig das Magnetfeld vom ersten Abschnitt (97a) der Leitung (95) im Extraktor (90) abgeschwächt oder entfernt wird und die Mikropartikel (122) in der Leitung (95) durch die Bewegung der mobilen Phase (75) in Richtung eines zweiten Abschnitts (97b) der Leitung (95) bewegt werden; (h) Anlegen eines Magnetfelds an dem zweiten Abschnitt (97b) der Leitung (95), wobei das Magnetfeld geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im zweiten Abschnitt (97b) zu immobilisieren; gefolgt von (i) Immobilisieren der Mikropartikel (122) an der Innenwand (93) in dem zweiten Abschnitt (97b) der Leitung; gefolgt von (k) Bewegen der zweiten mobilen Phase mit dem eluierten Analyten zum Auslass (100) der Vorrichtung durch weiteres Einpumpen der zweiten mobilen Phase (75) aus dem zweiten Vorratsgefäß (70) in den zweiten Eingang (20), wodurch der Analyt am Auslass (100) gereinigt dargestellt wird.

Methode zur Detektion eines Analyten in einem komplexen flüssigen Probenmaterial enthaltend besagten Analyten, umfassend die Schritte (a) Bereitstellen einer Vorrichtung, die dadurch gekennzeichnet ist, dass der Auslass (100) des HFS mit einer Trenneinheit (130) und die Trenneinheit mit einem Detektor (140) fluidisch verbunden ist, und der Ausgang (145) des Detektors mit dem Auffanggefäß (80) fluidisch verbunden ist. (b) Darstellung des gereinigten Analyten aus dem Probenmaterial unter Verwendung einer erfindungsgemäßen Vorrichtung, wobei der Analyt am Auslass (100) der Vorrichtung gereinigt dargestellt wird und die Schalteinheit (110) den Verbindungszustand (II) herstellt; (c) Bewegen der zweiten mobilen Phase mit (i) dem Analyten und (ii) gegebenenfalls zusammen mit dem Analyt eluierten weiteren Substanzen durch die Trenneinheit (130) und in den Detektor (140), wobei die Bewegung getrieben wird durch Einpumpen der zweiten mobilen Phase (75) aus dem zweiten Vorratsgefäß (70) in den zweiten Eingang (20); (d) Detektion des Analyten durch den Detektor (140).

### Detaillierte Beschreibung der Erfindung

Die Erfindung stellt ein Flüssigkeitssystem zur Verfügung, mit dem magnetische oder paramagnetische Mikropartikel und zwei verschiedene mobile Phasen, bevorzugt Flüssigphasen, manipuliert werden können. Beispielhaft wird die vorliegende Erfindung illustriert anhand der Verwendung entsprechender Mikropartikel mit kohlenwasserstoff-funktionalisierter Oberfläche. Solche Mikropartikel finden bislang keinen Einsatz für quantitative klinisch-chemische Analysen. Sie haben aber erhebliche Vorteile bei der Aufbereitung klinischen Probenmaterials. Diese Vorteile zeigen sich besonders dann, wenn Analyten mit einem niedrigen Molekulargewicht, typischerweise zwischen 50 und 1000 Dalton, nachgewiesen werden sollen. Insbesondere kann der Fachmann bei einer quantitativ chromatographischen Analyse von der Verwendung solcher Partikel profitieren.

Zur Probenaufarbeitung werden im einfachen Fall magnetische oder paramagnetische Mikropartikel (Extraktionspartikel) mit kohlenwasserstofffunktionalisierten Oberflächen in einem Reaktionsgefäß zusammen mit flüssigem Probenmaterial, beispielsweise Vollblut, Serum, Plasma oder hämolysiertem Blut in Kontakt gebracht. Daraufhin erfolgt eine Adsorption des Analyten aus der Flüssigphase an die funktionalisierte Oberfläche der Partikel. Nach einer gewissen Verweilzeit werden feste und flüssige Phase voneinander getrennt. Dies kann bevorzugt durch Entfernen der Flüssigphase aus dem Gefäß erfolgen, während die Partikel durch ein Magnetfeld im Gefäß zurück gehalten werden. Beispielsweise kann ein Permanentmagnet von außen an die Wand des Gefäßes gebracht werden, so dass die magnetischen Teilchen an dieser Stelle an der Gefäßinnenwand immobilisiert werden. Die Partikel können anschließend gewaschen werden. Hierzu kann der Magnet beispielsweise entfernt und die Partikel daraufhin in einem Waschpuffer resuspendiert werden. Nach erneuter Immobilisierung der Partikel und Entfernung des Waschpuffers wird der Analyt von der Oberfläche der Partikel eluiert durch Inkontaktbringen der Mikropartikel mit einem für die Desorption des Analyten geeigneten Lösungsmittel. Nach Trennung von Fest- und Flüssigphase kann der Analyt aus dem Lösungsmittel unter Zuhilfenahme chromatografischer Methoden nachgewiesen werden.

Die direkte Automatisierung der manuell durchgeführten Arbeitsschritte wie oben beschrieben beseitigt die Nachteile des Standes der Technik noch nicht in befriedigender Weise. Die vorliegende Erfindung beschreibt dagegen eine Möglichkeit der Automatisierung der Extraktion in einem Flüssigkeitssystem, bevorzugt einem Hochdruck-Flüssigkeitssystem, das überraschenderweise viele Vorteile bietet. Insbesondere kommt die erfindungsgemäße Vorrichtung mit einem Minimum an beweglichen Teilen aus und macht so die Verwendung von komplizierten, in drei Dimensionen bewegbaren Pipettiereinheiten oder aufwändigen Vakuumsystemen überflüssig.

Eine besonders bevorzugte Ausführungsform der vorliegenden Erfindung ist ein weitgehend geschlossenes Hochdruck-Flüssigkeitssystem und die Verwendung desselben zur Manipulation von in flüssigem Probenmaterial suspendierten magnetischen oder paramagnetischen Mikropartikeln und zwei verschiedenen mobilen Phasen. Ein weitgehend geschlossenes System im Sinne der vorliegenden Erfindung ist ein Hochdruck-Flüssigkeitssystem, bei dem zwischen dem von den mobilen Phasen ausgefüllten Raum und der Umgebung keine betriebsmäßig offene Verbindung besteht. Das erfindungsgemäße Hochdruck-Flüssigkeitssystem ist ein weitgehend geschlossenes System, da es über eine Injektionsvorrichtung verfügt, mittels derer sich in kontrollierter Weise ein Gemisch von flüssigem Probenmaterial und Extraktionspartikeln in das Flüssigkeitssystem einbringen lässt.

Erfindungsgemäß finden zwei unterschiedliche mobile Phasen Anwendung. Die erste mobile Phase wird so gewählt, dass mit ihr eine Trennung von Extraktionspartikeln und übrigem Probenmaterial erfolgen kann. In diesem Zusammenhang bedeutet "übriges Probenmaterial" dasjenige Material aus der flüssigen Probe, aus dem zumindest Anteile des darin enthaltenden Analyten durch Adsorption an die Extraktionspartikel extrahiert wurden. Mit der zweiten mobilen Phase wird der Analyt von den Extraktionspartikeln gelöst. Dabei ist es bevorzugt dass die erste und zweite mobile Phase flüssigen Aggregatzustand aufweisen bzw. im erfindungsgemäßen Hochdruck-Flüssigkeitssystem jeweils sich im flüssigen Aggregatzutand befinden. Dies impliziert auch die Verwendung von mobilen Phasen, die bei Raumtemperatur und normalem Umgebungsdruck flüchtig sind.

Bei Verwendung des erfindungsgemäßen Hochdruck-Flüssigkeitsystems verbleibt das eingebrachte Material ab der der Injektion des Gemisches aus Extraktionspartikeln und Probenmaterial bis zur chromatographischen Analyse des Analyten innerhalb des Systems.

Das beschriebene Verfahren erlaubt auf einfache Weise die Manipulation von magnetischen oder paramagnetischen Mikropartikeln, die zu extraktiv-analytischen Zwecken verwendet werden, bevorzugt im erfindungsgemäßen Hochdruck-Flüssigkeitssystem. Ein automatisierter Betrieb der erfindungsgemäßen Vorrichtung ist leicht möglich. Durch das Prinzip der Manipulation der Mikropartikel ist der Aufbau von analytischen Exktraktions-Systemen möglich, bei denen ein Minimum an bewegten Bauteilen eingesetzt werden müssen. Insbesondere aufwändige x-y-z-Pipettierungseinheiten oder Vakuumsysteme sind im Gegensatz zu bisher gebräuchlichen automatisierten Extraktionssystemen nicht mehr erforderlich. Das erfindungsgemäße System kann darüber hinaus außerordentlich kompakt konfiguriert werden und der Bedarf an festen bzw. flüssigen Verbrauchsmaterialien ist minimiert. Weiterhin ermöglicht der Aufbau eines geschlossenen Systems die Verwendung von Flüssigphasen mit einem vergleichsweise hohen Dampfdruck, der bei offenen Systemen wie Pipettierautomaten zu Problemen führt, beispielsweise infolge des Aufbaus von Druck durch Verdampfen der Flüssigphase in der Pipettenkammer. Verglichen mit bisherigen Systemen werden durch das erfindungsgemäße System auch sehr kurze Zykluszeiten und dadurch ein hoher Probendurchsatz ermöglicht.

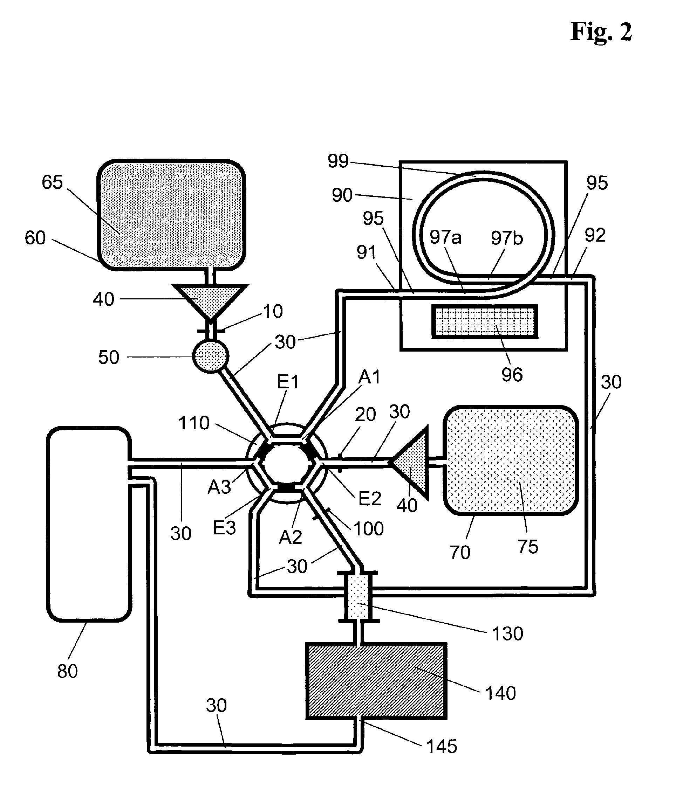

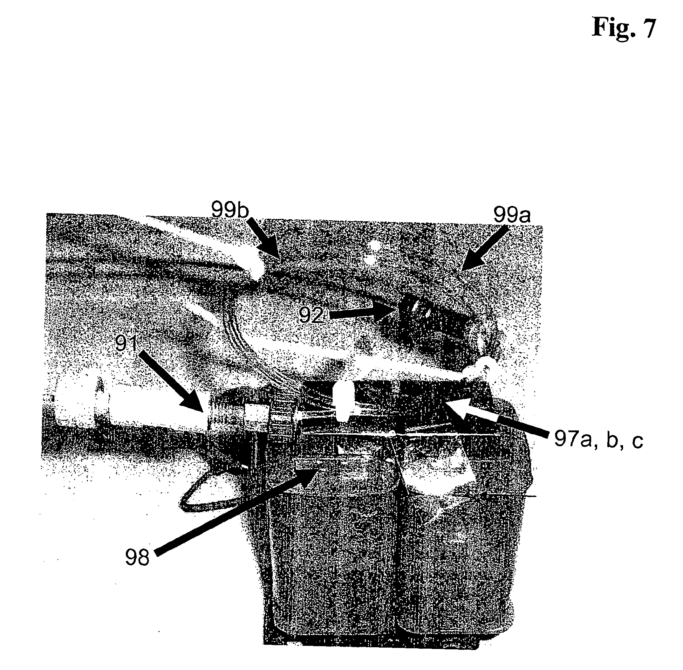

Der Aufbau einer besonders bevorzugten erfindungsgemäßen Vorrichtung ist in Figur 2 dargestellt. Die Vorrichtung kann weitgehend aus handelsüblichen HPLC-Komponenten aufgebaut werden. Eine Komponente mit besonderer Funktion ist der Extraktor (90). Hierbei handelt es sich in einer besonders bevorzugten Ausführungsform um einen Ringkern-Transformator, der unter Stromfluß ein starkes magnetisches Feld aufbaut, und auf dem eine HPLC-Leitung in Form einer Schleife fixiert ist (Figur 7). Ganz besonders bevorzugt ist eine HPLC-Leitung mit einem Innendurchmesser von zwischen 0,2 mm und 2,0 mm. Bevorzugte Materialien für die Leitung sind Polyphenylsulfon (PPSU), Polyetheretherketon (PEEK) und Silikon.

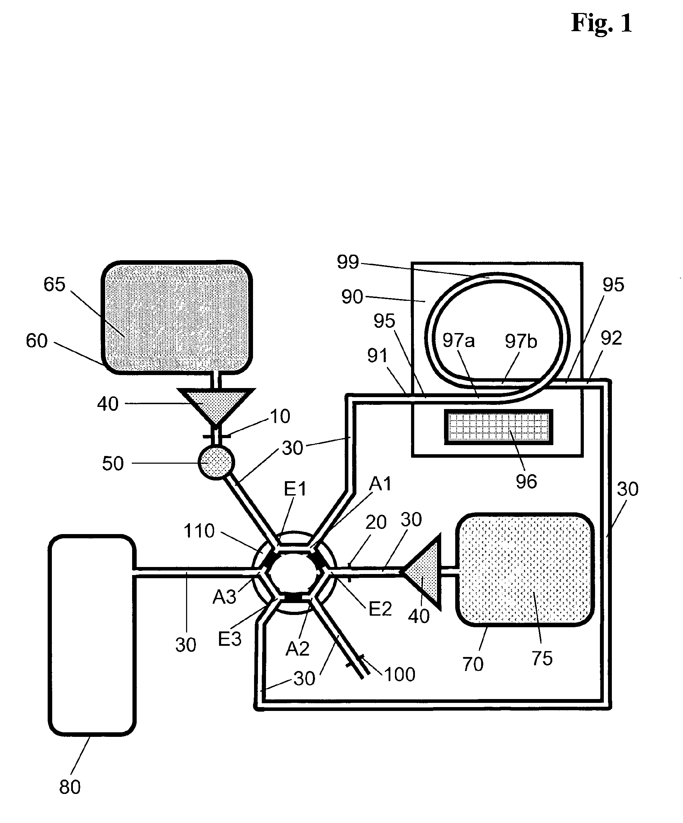

Im Detail enthält die Erfindung die folgenden Aspekte:
1. Vorrichtung mit einem Flüssigkeitssystem (FS) gemäß Figur 1, umfassend Mittel zur Herstellung fluidischer Verbindungen (30), einen ersten und einen zweiten Einlass (10, 20), mindestens ein Druckerzeugungsmittel (40), eine Injektionsvorrichtung (50), zwei Vorratsbehälter (60, 70) für eine erste und eine zweite mobile Phase (65, 75) mit flüssigem Aggregatzustand, ein Auffanggefäß (80), einen Extraktor (90), einen Auslass (100) und ein Mittel geeignet zur Herstellung von zwei verschiedenen fluiden Verbindungszuständen (Schalteinheit, 110), **dadurch gekennzeichnet, dass**
   - der erste Einlass (10) so ausgeführt ist, dass dem HFS unter Druck die erste mobile Phase (65) aus dem ersten Vorratsbehälter (60) über eine fluidische Verbindung zuführt werden kann;
   - der erste Einlass (10) weiterhin mit einer Injektionsvorrichtung (50) fluidisch verbunden ist, wobei die Injektionsvorrichtung so ausgeführt ist, dass sie das Einbringen einer Mischung (120) aus flüssigem Probenmaterial (121) und darin suspendierten Mikropartikeln (122) in die durch den Einlass eingebrachte erste mobile Phase erlaubt;
   - der zweite Einlass (20) so ausgeführt ist, dass dem HFS unter Druck die zweite mobile Phase (75) aus dem zweiten Vorratsbehälter (70) über eine fluidische Verbindung zuführt werden kann;
   - der erste Einlass (10) mit einem ersten Eingang (E1) der Schalteinheit (110) und der zweite Einlass (20) mit einem zweiten Eingang (E2) der Schalteinheit fluidisch verbunden sind;
   - der Extraktor (90) über einen Eingang (91) und einen Ausgang (92) verfügt, wobei der Eingang (91) des Extraktors mit einem ersten Ausgang (A1) der Schalteinheit fluidisch verbunden ist und der Ausgang (92) des Extraktors mit einem dritten Eingang (E3) der Schalteinheit fluidisch verbunden ist;
   - der Extraktor ferner eine fluidisch verbindende Leitung (95) zwischen dem Eingang (91) und dem Ausgang (92) umfasst, ferner eine steuerbare Vorrichtung (96), mit der an zwei oder mehr hintereinander angeordneten Abschnitten (97) dieser Leitung zeitweilig ein lokales Magnetfeld angelegt werden kann;
   - der zweite Ausgang (A2) der Schalteinheit (110) der Auslass (100) ist oder fluidisch mit dem Auslass (100) verbunden ist;
   - der dritte Ausgang (A3) der Schalteinheit (110) mit dem Auffanggefäß (80) fluidisch verbunden ist; und
   - die Schalteinheit (110) dazu geeignet ist, im ersten Verbidungszustand (I) E1 und A1, E2 und A2 sowie E3 und A3 (auch als Stellung (I) bezeichnet) fluidisch zu verbinden und im zweiten Verbidungszustand (II) E2 und A1, E3 und A2 sowie E1 und A3 (auch als Stellung (II) bezeichnet) fluidisch zu verbinden.
2. Vorrichtung gemäß Punkt 1 und Figur 2, **dadurch gekennzeichnet, dass** das FS ein Hochdruck-FS (HFS) ist, das HFS bevorzugt ein weitgehend geschlossenes System ist und der Auslass (100) mit einer Trenneinheit (130) und die Trenneinheit mit einem Detektor (140) fluidisch verbunden ist, und der Ausgang (145) des Detektors mit dem Auffanggefäß (80) fluidisch verbunden ist.
3. Vorrichtung gemäß Punkt 2, **dadurch gekennzeichnet, dass** die Trenneinheit (130) eine Chromatografie-Säule ist.
4. Vorrichtung gemäß einem der Punkte 2 oder 3, **dadurch gekennzeichnet, dass** der Detektor (140) ausgewählt ist aus der Gruppe bestehend aus UV/Vis-Spektrometer, Diodenarray-Detektor, Lichtstreudetektor, Fluoreszenzdetektor, Brechungsindexdetektor, Massenspektrometer, Leitfähigkeitsdetektor, Elektrochemischer Detektor.
5. Vorrichtung gemäß einem der Punkte 1 bis 4, **dadurch gekennzeichnet, dass** die steuerbare Vorrichtung (96) des Extraktors (90) einen Elektromagneten umfasst.
6. Vorrichtung gemäß Punkt 5, **dadurch gekennzeichnet, dass** die Leitung (95) zwischen Eingang (91) und Ausgang (92) des Extraktors (90) helikal mit einer Windung (99), auch als Schleife bezeichnet, ausgeführt ist, wobei die jeweils zum Eingang und Ausgang führenden Abschnitte (97a, 97b) der Leitung nebeneinander angeordnet sind.
7. Vorrichtung gemäß Punkt 6 und Figur 2B, **dadurch gekennzeichnet, dass** die die Leitung (95) zwischen Eingang (91) und Ausgang (92) des Extraktors (90) helikal und mit zwei oder mehr Windungen bzw. Schleifen (99a, 99b) ausgeführt ist, wobei ein oder mehrere Abschnitte (97c) der Windungen und die jeweils zum Eingang (91) und Ausgang (92) führenden Abschnitte (97a, 97b) der Leitung nebeneinander angeordnet sind.
8. Vorrichtung gemäß einem der Punkte 5 bis 7, **dadurch gekennzeichnet, dass** der Elektromagnet so angeordnet ist, dass das Magnetfeld auf zwei oder mehr nebeneinander angeordnete Abschnitte (97) der Leitung (95) zwischen Eingang (91) und Ausgang (92) des Extraktors (90) wirken kann.
9. Vorrichtung gemäß einem der Punkte 5 bis 8, weiterhin umfassend eine Steuereinheit und **dadurch gekennzeichnet, dass** die Steuereinheit das Druckerzeugungsmittel (40), die Schalteinheit (110) und den Elektromagneten steuert.
10. Vorrichtung gemäß einem der Punkte 2 bis 9, **dadurch gekennzeichnet, dass** das Druckerzeugungsmittel zwei HPLC-Pumpen umfasst.
11. Vorrichtung gemäß einem der Punkte 1 bis 10, **dadurch gekennzeichnet, dass** das Auffanggefäß (80) einen Magneten oder Elektromagneten umfasst.
12. Vorrichtung gemäß einem der Punkte 1 bis 11, weiterhin umfassend eine erste (65) und eine zweite (75) mobile Phase mit flüssigem Aggregatzustand.
13. Vorrichtung gemäß einem der Punkte 1 bis 12, weiterhin umfassend magnetische oder paramagnetische Mikropartikel (122).
14. Vorrichtung gemäß Punkt 13, **dadurch gekennzeichnet, dass** die Mikropartikel eine funktionalisierte Oberfläche (123) aufweisen.
15. Vorrichtung gemäß Punkt 14, **dadurch gekennzeichnet, dass** die Oberfläche die Adsorption eines Analyten erlaubt.
16. Vorrichtung gemäß Punkt 15, **dadurch gekennzeichnet, dass** die Oberfläche der Mikropartikel hydrophob ist.
17. Vorrichtung gemäß Punkt 15, **dadurch gekennzeichnet, dass** die Oberfläche der Mikropartikel hydrophob ist.
18. Vorrichtung gemäß Punkt 15, **dadurch gekennzeichnet, dass** die Oberfläche ausgewählt ist aus der Gruppe bestehend aus Anionenaustauschermaterial, Kationenaustauschermaterial, gemischt hydrophobes und hydrophiles Kopolymer und Silica.
19. Vorrichtung gemäß Punkt 17, **dadurch gekennzeichnet, dass** die Oberfläche C1-C50, bevorzugt C5-C20 Kohlenwasserstoffreste umfasst.
20. Vorrichtung gemäß einem der Punkte 13 bis 19, weiterhin umfassend flüssiges Probenmaterial.
21. Vorrichtung gemäß Punkt 20, **durch gekennzeichnet, dass** das Probenmaterial eine Suspension ist.
22. Vorrichtung gemäß Punkt 21, **durch gekennzeichnet, dass** das Probenmaterial ein Homogenat ist.
23. Vorrichtung gemäß einem der Punkte 20 bis 22, **durch gekennzeichnet, dass** das Probenmaterial Nahrungsmittelbestandteile, Bestandteile einer Bodenprobe oder Abwasser enthält.
24. Vorrichtung gemäß Punkt 20, **durch gekennzeichnet, dass** das Probenmaterial eine biologische Flüssigkeit, eine Suspension oder ein Homogenat mit biologischem Material oder ein Lysat von biologischem Material umfasst.
25. Vorrichtung gemäß Punkt 24, **durch gekennzeichnet, dass** das Probenmaterial ausgewählt ist aus der Gruppe bestehend aus Vollblut, Citrat-Blut, Heparin-Blut, EDTA-Blut, Plasma, Serum, Urin, Sputum, Synovialflüsigkeit, Bronchiallavage, Atemluft-Kondensat und Liquor.
26. Verwendung einer Vorrichtung gemäß einem der Punkte 1 bis 25 für die Manipulation von magnetischen Mikropartikeln und zwei verschiedenen mobilen Phasen mit flüssigem Aggregatzustand.
27. Verwendung gemäß Punkt 26, weiterhin für die Manipulation von flüssigem Probenmaterial.
28. Methode zur Darstellung eines gereinigten Analyten aus einem komplexen flüssigen Probenmaterial enthaltend besagten Analyten, umfassend die Schritte
   (a) Inkontaktbringen des flüssigen Probenmaterials (121) enthaltend den Analyten mit Mikropartikeln (122) aus einem magnetischen oder paramagnetischen Material mit einer funktionalisierten Oberfläche (123), wobei der Analyt an die Oberfläche adsorbiert; gefolgt von
   (b) Einbringen des Probenmaterials mit den Mikropartikeln in eine Vorrichtung gemäß einem der Punkte 1 bis 25 unter Verwendung der Injektionsvorrichtung (50); gefolgt von
   (c) Einpumpen einer ersten mobilen Phase (65) aus dem ersten Vorratsgefäß (60) in den ersten Einlass (10) der Vorrichtung, wobei die Schalteinheit (110) der Vorrichtung den Verbindungszustand (I) herstellt und im Extraktor (90) an dem ersten Abschnitt (97a) der darin befindlichen Leitung (95) ein Magnetfeld angelegt wird, das geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im ersten Abschnitt (97a) zu immobilisieren; gefolgt von
   (d) Immobilisieren der Mikropartikel (122) im Extraktor (90) an der Innenwand (93) in dem ersten Abschnitt (97a) der Leitung; gefolgt von
   (e) Trennen der Mikropartikel (122) vom übrigen Probenmaterial durch weiteres Einpumpen der ersten mobilen Phase (65) aus dem ersten Vorratsgefäß (60) in den ersten Einlass (10), wobei die immobilisierten Mikropartikel mit der ersten mobilen Phase gewaschen werden und das übrige Probenmaterial dem Auffangbehälter (80) zugeführt wird; gefolgt von
   (f) Umschalten der Schalteinheit (110) in den Verbindungszustand (II) und Einpumpen einer zweiten mobilen Phase (75) aus dem zweiten Vorratsgefäß (70) in den zweiten Einlass (20) der Vorrichtung, wobei die zweite mobile Phase (75) geeignet ist, den adsorbierten Analyten von der Oberfläche der Mikropartikel (122) zu lösen; gefolgt von
   (g) Eluieren des Analyten durch Inkontaktbringen der Mikropartikel (122) mit der zweiten mobilen Phase (75), wobei gleichzeitig das Magnetfeld vom ersten Abschnitt (97a) der Leitung (95) im Extraktor (90) abgeschwächt oder entfernt wird und die Mikropartikel (122) in der Leitung (95) durch die Bewegung der mobilen Phase (75) in Richtung eines zweiten Abschnitts (97b) der Leitung (95) bewegt werden;
   (h) Anlegen eines Magnetfelds an dem zweiten Abschnitt (97b) der Leitung (95), wobei das Magnetfeld geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im zweiten Abschnitt (97b) zu immobilisieren; gefolgt von
   (i) Immobilisieren der Mikropartikel (122) an der Innenwand (93) in dem zweiten Abschnitt (97b) der Leitung; gefolgt von
   (j) Bewegen der zweiten mobilen Phase mit dem eluierten Analyten zum Auslass (100) der Vorrichtung durch weiteres Einpumpen der zweiten mobilen Phase (75) aus dem zweiten Vorratsgefäß (70) in den zweiten Eingang (20), wodurch der Analyt am Auslass (100) gereinigt dargestellt wird.
29. Methode gemäß Punkt 28, **dadurch gekennzeichnet, dass** in der Vorrichtung die Leitung (95) zwischen dem Eingang (91) und dem Ausgang (92) des Extraktors (90) helikal und mit n (n = 2 oder größer als 2) Windungen (99) ausgeführt ist, wobei n Abschnitte (97c) der Windungen und die jeweils zum Eingang (91) und Ausgang (92) führenden Abschnitte (97a, 97b) der Leitung nebeneinander angeordnet sind, das Magnetfeld auf die nebeneinander angeordnete Abschnitte der Leitung zwischen Eingang und Ausgang des Extraktors (97a, 97b, 97c) wirken kann, und Schritt (e) gefolgt wird von den Schritten (e') Waschen der Mikropartikel (122) durch weiteres Einpumpen der ersten mobilen Phase (65) in den ersten Einlass (10), wobei gleichzeitig das Magnetfeld an dem Abschnitt der Leitung im Extraktor, and dem die Mikropartikel immobilisiert sind, abgeschwächt oder entfernt wird und die Mikropartikel in der Leitung durch die Bewegung der mobilen Phase in Richtung des nächsten für eine Immobilisierung geeigneten Abschnitts bewegt werden; gefolgt von (e") erneutes Immobilisieren der Mikropartikel durch Anlegen eines Magnetfelds an den nächsten für eine Immobilisierung geeigneten Abschnitt der Leitung; wobei (e') und (e") n-1 mal durchgeführt werden können.
30. Methode gemäß einem der Punkte 28 und 29, **dadurch gekennzeichnet, dass** die erste mobile Phase Wasser oder eine wässrige Lösung ist.
31. Methode gemäß einem der Punkte 28 bis 30, **dadurch gekennzeichnet, dass** die zweite mobile Phase ein organisches Lösungsmittel ist.
32. Methode gemäß einem der Punkte 28 bis 31, **dadurch gekennzeichnet, dass** die zweite mobile Phase ein unpolares organisches Lösungsmittel ist.
33. Methode gemäß einem der Punkte 28 bis 31, **dadurch gekennzeichnet, dass** die zweite mobile Phase ein polares organisches Lösungsmittel ist.
34. Methode gemäß einem der Punkte 28 bis 31, **dadurch gekennzeichnet, dass** die zweite mobile Phase ein organisches Lösungsmittel is, das ausgewählt ist aus der Gruppe bestehend aus einem C1-C6 aliphatischen Alkohol, Acetonitril, Methyl-*tert*-butylether (MTBE), Aceton, Ethylacetat, Hexan, Dimethylsulfoxid, Diisopropylether, Dichlormethan, Trichlormethan, und Tetrachlormethan.
35. Methode gemäß einem der Punkte 28 bis 34, **dadurch gekennzeichnet, dass** das Probenmaterial eine biologische Flüssigkeit, eine Suspension oder ein Homogenat mit biologischem Material oder ein Lysat von biologischem Material umfasst.
36. Methode gemäß Punkt 35, **dadurch gekennzeichnet, dass** das Probenmaterial ausgewählt ist aus der Gruppe bestehend aus Vollblut, Citrat-Blut, Heparin-Blut, EDTA-Blut, Plasma, Serum, Urin, Sputum, Synovialflüsigkeit, Bronchiallavage, Atemluft-Kondensat und Liquor.
37. Methode zur Detektion eines Analyten in einem komplexen flüssigen Probenmaterial enthaltend besagten Analyten, umfassend die Schritte
   (a) Bereitstellen einer Vorrichtung gemäß einem der Punkte 2 bis 25;
   (b) Darstellung des gereinigten Analyten aus dem Probenmaterial unter Einsatz einer Methode gemäß einem der Punkte 28 bis 36, wobei der Analyt am Auslass (100) der Vorrichtung gereinigt dargestellt wird und die Schalteinheit (110) den Verbindungszustand (II) herstellt;
   (c) Bewegen der zweiten mobilen Phase mit (i) dem Analyten und (ii) gegebenenfalls zusammen mit dem Analyt von den Mikropartikeln eluierten weiteren Substanzen durch die Trenneinheit (130) und in den Detektor (140), wobei die Bewegung getrieben wird durch Einpumpen der zweiten mobilen Phase (75) aus dem zweiten Vorratsgefäß (70) in den zweiten Eingang (20);
   (d) Detektion des Analyten durch den Detektor (140).
38. Methode gemäß Punkt 37, **dadurch gekennzeichnet, dass** Schritt (d) gefolgt wird von den Schritten
   (e) Umschalten der Schalteinheit (110) in den Verbindungszustand (I);
   (f) Abschwächen oder Entfernen des Magnetfelds im Extraktor (90);
   (g) Einpumpen der ersten mobilen Phase (65) aus dem zweiten Vorratsgefäß (60) in den ersten Einlass (10), wobei die Mikropartikel (122) in Richtung des Auffanggefäßes (80) bewegt werden;
   (h) Bewegen der Mikropartikel mit der ersten mobilen Phase in das Auffanggefäß.
39. Methode gemäß Punkt 38, **dadurch gekennzeichnet, dass** eine Vorrichtung gemäß einem der Punkte 11 bis 18 verwendet wird und die Mikropartikel im Auffanggefäß durch ein Magnetfeld immobilisiert werden. Die folgenden Beispiele, Publikationen und die Abbildungen erläutern die Erfindung, deren Schutzumfang sich aus den Patentansprüchen ergibt, weiter. Die beschriebenen Vorrichtungen und Verfahren sind als Beispiele zu verstehen, die auch noch nach Modifikationen den Gegenstand der Erfindung beschreiben.

### Beschreibung der Figuren

- Figur 1: Vorrichtung mit einem Flüssigkeitssystem (FS), umfassend Mittel zur Herstellung fluidischer Verbindungen (30), einen ersten und einen zweiten Einlass (10, 20), mindestens ein Druckerzeugungsmittel (40), eine Injektionsvorrichtung (50), zwei Vorratsbehälter (60, 70) für eine erste und eine zweite mobile Phase (65, 75) mit flüssigem Aggregatzustand, ein Auffanggefäß (80), einen Extraktor (90), einen Auslass (100) und ein Mittel geeignet zur Herstellung von zwei verschiedenen fluiden Verbindungszuständen (Schalteinheit, 110). In der abgebildeten bevorzugten Ausführungsform besteht das Druckerzeugungsmittel aus zwei Pumpen, die jeweils zwischen Vorratsbehälter und Einlass angeordnet sind. Alternativ wäre es möglich, die Vorratsbehälter unter Druck zu setzen. Bei dem Extraktor (90) ist die Leitung (95) zwischen Eingang (91) und Ausgang (92) des Extraktors (90) helikal mit einer Windung (99) ausgeführt, wobei die jeweils zum Eingang und Ausgang führenden Abschnitte (97a, 97b) der Leitung nebeneinander angeordnet sind.Die mit (97a) und (97b) bezeichneten zum Eingang (91) und Ausgang (92) des Extraktors führenden Abschnitte der Leitung werden in ihrer Gesamtheit auch mit (97) bezeichnet.
- Figur 2: Bevorzugtes Hochdruck-FS (HFS), wobei das HFS ein weitgehend geschlossenes System ist und der Auslass (100) mit einer Trenneinheit (130) und die Trenneinheit mit einem Detektor (140) fluidisch verbunden ist, und der Ausgang (145) des Detektors mit dem Auffanggefäß (80) fluidisch verbunden ist. In Bezug auf den Extraktor wird auf die Beschreibung zu Figur 1 hingewiesen.

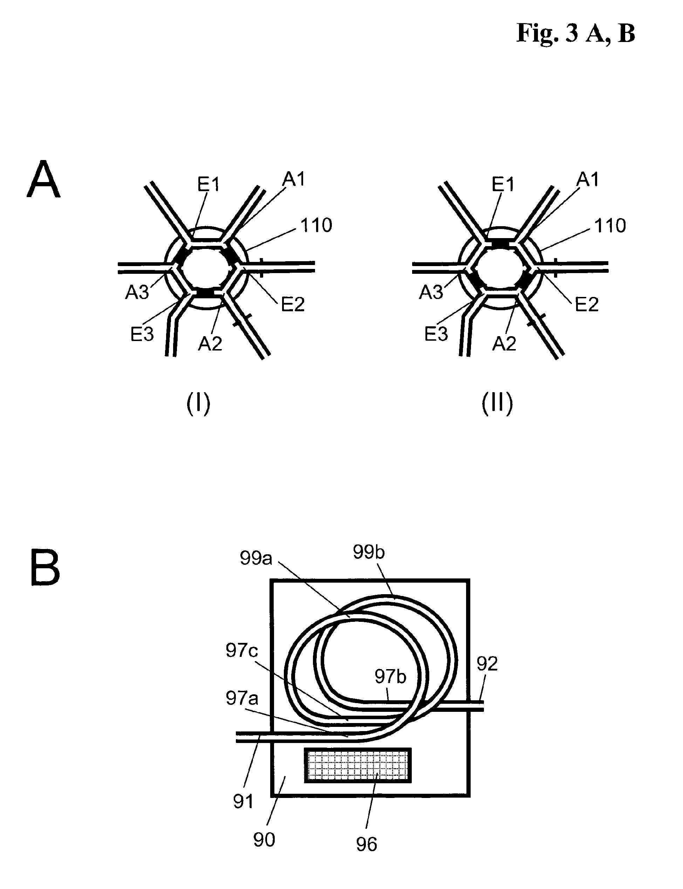

- Figur 3: A - Vergrößerter Ausschnitt aus Figur 1 und Figur 2, der die zwei durch die Schalteinheit (110) herstellbaren Verbindungszustände zeigt. In Zustand (I) werden A1 und E1, A2 und E2, sowie A3 und E3 gleichzeitig fluidisch verbunden; in Zustand (II) werden A3 und E1, A1 und E2, sowie A2 und E3 gleichzeitig fluidisch verbunden. B - Besonders bevorzugte Form des Extraktors (90), wobei die Leitung (95) zwischen Eingang (91) und Ausgang (92) des Extraktors (90) helikal und mit zwei oder mehr Windungen (99a, 99b) ausgeführt ist, wobei ein oder mehrere Abschnitte (97c) der Windungen und die jeweils zum Eingang (91) und Ausgang (92) führenden Abschnitte (97a, 97b) der Leitung nebeneinander angeordnet sind.

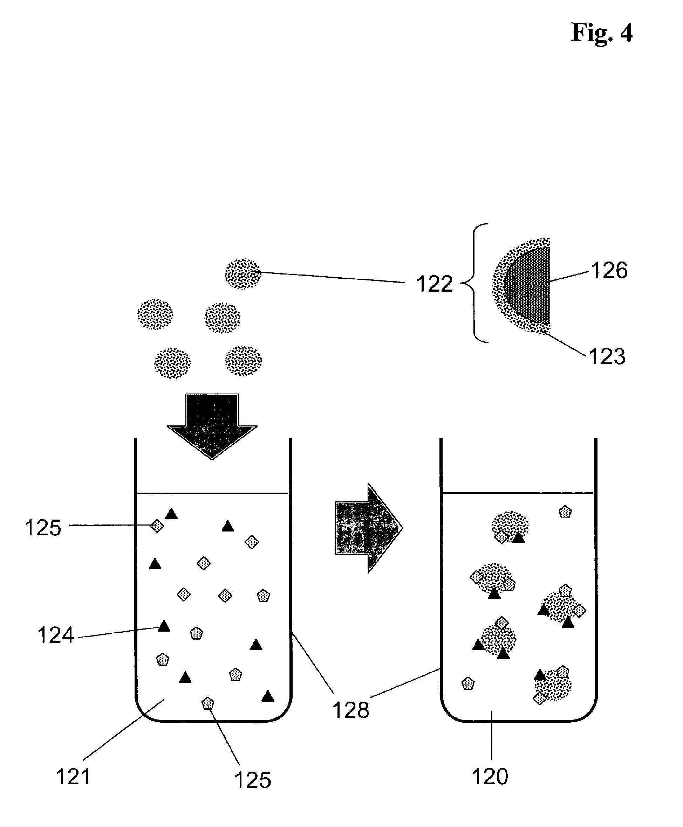

- Figur 4: Schematische Darstellung der Extraktionspartikel (122) und deren Verwendung zur Adsorption des im flüssigen Probenmaterial (121) enthaltenen Analyten (124) und gegebenenfalls weiterer Substanzen (125), die an die Oberfläche (123) der Extraktionspartikel adsorbieren können. Zu diesem Zweck ist die Oberfläche (123) der Extraktionspartikel funktionalisiert, z.B. ist sie in einer besonders bevorzugten Ausführungsform zumindest teilweise mit einer hydrophoben Schicht überzogen. Der Kern der Extraktionspartikel enthält ein magnetisches oder paramagnetisches Material. Die Mischung (120) aus Probenmaterial (121) und Extraktionspartikeln (122) mit adsorbiertem Analyten (124) wird unter Verwendung der Injektionsvorrichtung (50), s. Figur 1 und Figur2 in die erfindungsgemäße Vorrichtung eingebracht.

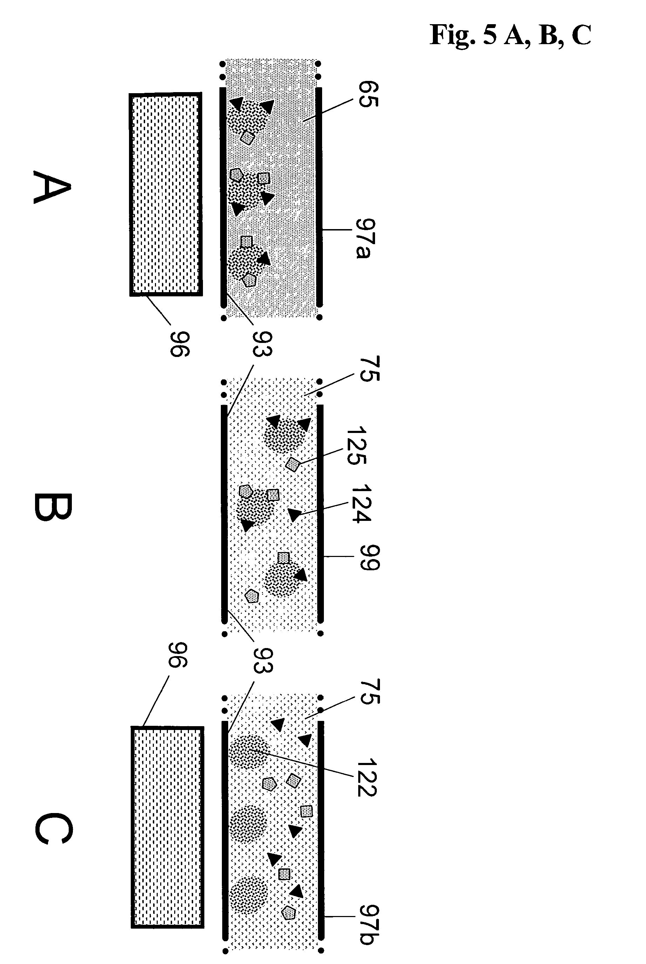

- Figur 5: Schematische Darstellung der Wirkung des Extraktors (90). A - Im Bereich (97a) liegt vermittelt durch die Vorrichtung (96) ein Magnetfeld an (symbolisiert durch waagerechte Textur von (96)), das die Extraktionspatikel mit den adsorbierten Substanzen an der dem Magnetfeld zugewandten Seite der Innenwand (93) der Leitung (95) immobilisiert. Parallel wird die erste mobile Phase (65) zusammen mit dem übrigen Probenmaterial in Richtung Ausgang des Extraktors und Auffanggefäß (80) bewegt. Während dieses Arbeitsschritts werden die Extraktionspartikel vom übrigen Probenmaterial getrennt. Da hierbei ständig weitere erste mobile Phase in das FS gepumpt wird, sind die Partikel schließlich komplett von der ersten mobilen Phase umgeben. B - Nachfolgend werden die Extraktionspartikel mit dem adsorbierten Analyten mit der zweiten mobilen Phase in Kontakt gebracht und das Magnetfeld ausgeschaltet (bzw. ausreichend reduziert), so dass die Extraktionspartikel durch den Fluß der zweiten mobilen Phase in der Leitung (95) wieder mobilisiert werden und in die Schleife (99) gelangen. Dargestellt ist dieser Bereich, in dem die adsorbierten Substanzen (124, 125) von den Extraktionspartikeln (122) dabei sind, gelöst zu werden. Dieser Vorgang findet kontinuierlich statt, während die Extraktionspartikel die Schleife (99) durchlaufen. C - Anschließend werden die Extraktionspartikel durch den Fluß der zweiten mobilen Phase (75) durch die Leitung (95) an den Bereich (97b) transportiert, wo sie mittels eines ein magnetischen Feldes (erzeugt unter Verwendung von (96)) erneut immobilisiert werden. Die von den Extraktionspartikeln gelösten Substanzen, darunter der Analyt, liegen nun in gereinigter Form in der zweiten mobilen Phase vor. Sie werden anschließend weiter in Flußrichtung transportiert, um beispielsweise eine analytischen Trennvorrichtung und einen Detektor zu durchlaufen.

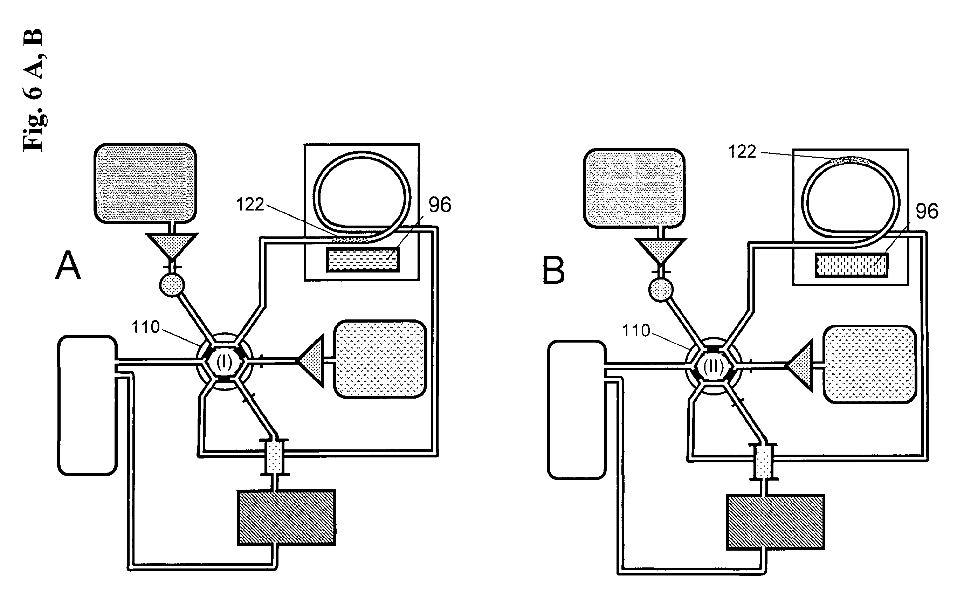

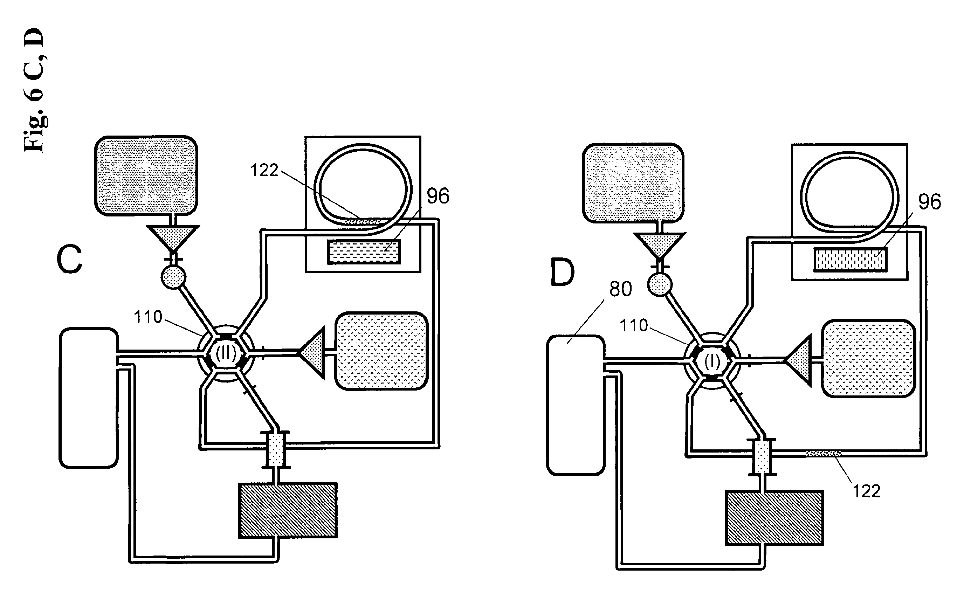

- Figur 6: Schematische Darstellung des Ablaufs der Probenreinigung mittels der in Figur 2 erfindungsgemäßen Vorrichtung. Die gezeigten Elemente der Vorrichtung entsprechen exakt den in den Figuren 1, 2 und 3 gezeigten und hierfür beschriebenen Elementen. Die in A-D dargestellten Schritte werden in Beispiel 1 beschrieben.
- Figur 7: Eine mögliche und bevorzugte Ausführungsform des Extraktors, umfassend einen Elektromagneten mit einem Ringkerntransformator (98). Der Elektromagnet kann beispielsweise über eine Steuervorrichtung angesteuert werden,
wobei bevorzugt die Steuervorrichtung auch die Schaltzustände der Schalteinheit (110) einstellt. Die Schleifeder Leitung des Extraktors ist in Form einer ersten und zweiten Windung ausgeführt (99a, 99b). Für eine längere Verweilzeit der Extraktionspartikel in der Schleife können weitere Windungen hinzugefügt werden. Die in diesem Extraktor konkret verwendete Leitung besteht aus HPLC-Rohr aus Polyphenylsulfon (PPSU). Eingang (91) und Ausgang (92) des Extraktors sind mit Kupplungen versehen. Im gezeigten Beispiel sind drei Bereiche, in denen die Extraktionspartikel durch Anlegen eines Magnetfelds immobilisiert werden können, 97a, 97b und 97c.

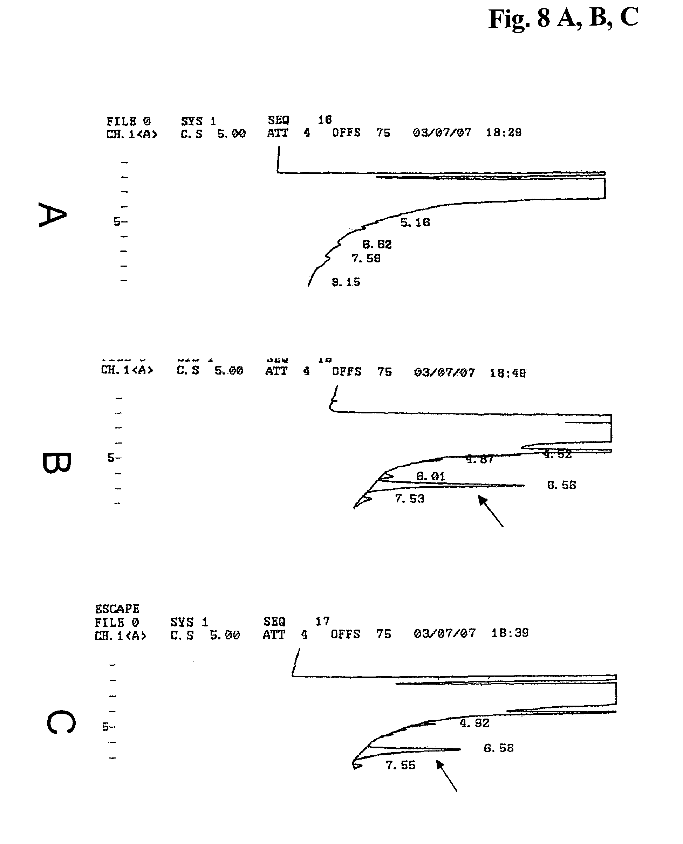

- Figur 8: Exemplarische Chromatogramme von Proben, die mit Hilfe eines erfindungsgemäßen Hochdruck-Flüssigkeitssystems mit angeschlossener Trenn- und Detektionseinheit aufgearbeitet und analysiert wurden (siehe Beispiel 3). Die X-Achse zeigt die Retentionszeit, die Y-Achse die am UV-Spektrometer gemessene Absorption.
A - Chromatogramm einer "drug-free" Patientenprobe
B - Chromatogramm der Kalibratorprobe mit einer eingestellten Itraconazol-Konzentration von 2,9 mg/l. Die Peak-Fläche umfasst 81234 counts, die Retentionszeit beträgt 6,56 min.
C - Chromatogramm der analysierten Patientenprobe. Die ermittelte Itraconazol-Konzentration ist 2,0 mg/l. Die Peak-
Fläche umfasst 56352 counts, die Retentionszeit beträgt 6,56 min.

### Beispiel 1

Beschreibung der Verwendung der erfindungsgemäßen Vorrichtung

Allgemein kann man die Verwendung der Vorrichtung zyklisch gestalten, wobei die Abschnitte eines Zyklus exemplarisch in A-D unterteilt werden können. In diesem zusammenhang wird auf die Figuren 1-7, besonders die Figur 6 A-D verwiesen.
A - Nach der Injektion des Gemisches aus Probenmaterial und Extraktionspartikeln gelangt die Mischung in den Extraktor, wo die Partikel (122) das erste Mal immobilisiert werden. Dieser Abschnitt entspricht der in Figur 5 A gezeigten Situation im Extraktor. Die Schalteinheit befindet sich in Stellung (I), wodurch die erste mobile Phase in das System geleitet wird. Mittels der Vorrichtung (96) liegt ein Magnetfeld an, symbolisiert durch die waagerechte Textur von (96).
B - Die Schalteinheit befindet sich in Stellung (II), wodurch die zweite mobile Phase in das System geleitet wird. Nach der Trennung des übrigen Probenmaterials von den Partikeln und dem Wechsel von der ersten zur zweiten mobilen Phase gelangen die Extraktionspartikel (122) in die Schleife des Extraktors, entsprechend der in Figur 5B gezeigten Situation. In diesem Prozessschritt liegt kein Magnetfeld an bzw. das Magnetfeld ist soweit reduziert, dass die Mobilität der Extraktionspartikel wieder möglich ist, symbolisiert durch die senkrechte Textur von (96). Die Verweilzeit der Extraktionspartikel in der Schleife (99) wird bevorzugt so eingestellt, dass mindestens 20%, mehr bevorzugt mindestens 30%, noch mehr bevorzugt mindestens 50%, noch mehr bevorzugt mindestens 75%, noch mehr bevorzugt mindestens 90% des Analyten in die zweite mobile Phase eluiert werden. Für quantitative Bestimmungen ist es von Vorteil, dass bei gleichen Elutionszeiten sich die Menge des eluierten Analyten proportional verhält zur Konzentration des Analyten im Probenmaterial.
C - Im anschließenden Schritt wird vor dem Ausgang des Extraktors erneut ein Magnetfeld an der Leitung angelegt (s. Textur von (96)). Die in der vorbeifließenden mobilen Phase suspendierten Partikel (122) werden erneut immobilisiert, entsprechend der in Figur 5C gezeigten Situation. Die Schalteinheit befindet sich auch in diesem Prozessschritt in Stellung (II), wodurch die von den Partikeln gelösten Substanzen (darunter auch der Analyt) zusammen mit der zweiten mobilen Phase der Trenneinheit und dem Detektor zugeführt werden. Das durch (96) erzeugte Magnetfeld wird dabei aufrecht erhalten und die Partikel (122) festgehalten.
D - Im Anschluss an den erfolgten Trennungs- und Detektionsschritt wird die Vorrichtung regeneriert. Die Schalteinheit wird in Stellung (I) gebracht und die erste mobile Phase wird in das Flüssigkeitsystem eingeleitet (eingepumpt). In diesem Prozessschritt liegt kein Magnetfeld an bzw. das Magnetfeld ist soweit reduziert, dass die Mobilität der Extraktionspartikel wieder möglich ist, symbolisiert durch die senkrechte Textur von (96). Die Partikel (122) werden zusammen mit der sie umgebenden Flüssigphase in den Auffangbehälter (80) transportiert. In dem Behälter können die Partikel optional durch ein lokales Magnetfeld konzentriert werden, um beispielsweise einer Wiedergewinnung leichter zugänglich zu sein.

### Beispiel 2

Aufarbeitung und Analyse von Probenmaterial

Als exemplarisches biologisches Probenmaterial wird Serum mit einer Suspension C18 funktionalisierter ferromagnetischer Mikropartikel (Extraktionspartikel) gemischt. Beim Mischprozess werden niedrig-polare Analytmoleküle an die hydrophoben Ketten der Mikropartikel adsorbiert. Das Gemisch von Probe und Partikeln wird über ein Injektionsventil in die erfindungsgemäße Vorrichtung injiziert. Die erste mobile Phase dieses Systems ist eine wässrige Lösung. Durch Einleiten der ersten mobilen Phase wird das Gemisch von Probe und Partikeln zu einem Elektromagneten transferiert. Dort werden die mit Analyt beladenen ferromagnetischen Partikel im Schlauchsystem mit Hilfe des aktivierten Elektromagneten zurückgehalten und immobilisiert. Die nicht partikelgebundene Probenmatrix wird vom kontinuierlichen Strom der ersten mobilen Phase in das Auffanggefäß (Abfall) transportiert. Mit Hilfe eines 6-Port-HPLC-Schaltventils wird nun die wässrige mobile Phase im Schlauchsystem durch ein organisches Lösungsmittel als zweite mobile Phase ersetzt. Für eine kurze Zeit wird der Elektromagnet stromlos geschaltet; in der Schleife des Extraktors kommt es zur Resuspendierung der Partikel im organischen Lösungsmittel und zur Ablösung der Zielanalyte von den funktionalisierten Partikeln. Nach wenigen Sekunden wird der Elektromagnet wieder eingeschaltet, die in der Schlauchschleife zwischenzeitlich mobilen Partikel werden wieder immobilisiert. Die von den Partikeln eluierten Zeilanalyt-Moleküle werden direkt auf eine analytische Chromatografie- Säule transferriert. Dieser Trennsäule ist ein chromatografischer Detektor nachgeschaltet. Auf Grundlage dieses Arbeitsprinzips wurde der Prototyp eines Extraktionssystems gefertigt, dessen Extraktor in Figur 7 gezeigt ist.

### Beispiel 3

Testmessung unter Verwendung der erfindungsgemäßen Vorrichtung

Als exemplarischer Analyt der in-vitro-Diagnostik wurde das antimikrobielle Pharmakon Itraconazol betrachtet. Es erfolgte die Quantifizierung dieses Stoffes im therapeutischen Konzentrationbereich aus humaner Probenmatrix. Hierfür wurden Serum-Proben mit bekannten, mittels LC-Tandem-Massenspektrometrie bestimmten Itraconazol-Konzentrationen sowie "drug-free"-Seren untersucht.

Es fanden C18-modifizierte magnetische oder paramagnetische Extraktionspartikel der Firma Dynal (Oslo, Norwegen) Verwendung (Dynabeads® 18, 50 mg/ml). 15 µl dieser Bead-Suspension wurden in ein Reagiergefäß pipettiert; dieses wurde auf einen permanentmagnetischen Partikel-Extraktor (Dynal MPC-S Magnetic Particle Concentrator) positioniert. Das partikelfreie Lösungsmedium wurde abgehoben. Die Partikel wurden dann zweimal mit jeweils 200 µl 0,1 %-iger Trichloressigsäure gewaschen; hierfür wurde das Reagiergefäß wiederholt aus dem Extraktor entnommen und wieder darin positioniert, um die Partikel so zu immobilisieren. Schließlich wurden die Partikel in 1000 µl Wasser suspendiert.

Für die Analyse von Serum-Proben mittels des in der vorliegen Erfindung beschriebenen Systems wurden in einem Reagiergefäß 15 µl Probe mit 15 µl der vorbereiteten wässrigen Partikelsuspension gemischt. Dieses Gemisch wurde jeweils über das Hand-Injektionsventil in die beschriebene Vorrichtung injiziert und entsprechend des oben dargestellten Arbeitsprozesses aufgearbeitet. Unter Verwendung eines konventionellen Autosamplers kann das Aufziehen von Probenaliquots, die Mischung von Probe und Extraktionspartikeln sowie die Injektion, die im Aufbau eines ersten Prototypen manuell vorgenommen werden, ebenso vollautomatisch erfolgen.

Die Abbildungen 8 A-C zeigen exemplarisch Chromatogramme der Analyse einer Blank-Probe (a), einer Kalibrator-Probe (b) mit einer Itraconazol-Konzentration von 2,9 mg/l, sowie einer gepoolten Patientenprobe (c). Wird die Patientenprobe anhand der Kalibrator-Probe quantifiziert, errechnet sich eine Konzentration von 2,0 mg/l. Das gleiche Resultat wurde für diese Probe mittels einer anerkannten massenspektrometrischen Analysenmethode zur Bestimmung von Itraconazol gefunden (Vogeser M, Spöhrer U, Schiel X. Determination of itraconazole and hydroxyitraconazole in plasma by use of liquid chromatography-tandem mass spectrometry with on-line solid-phase extraction. Clin Chem Lab Med 2003; 41:915-20).

## Patentansprüche

1. Vorrichtung mit einem Flüssigkeitssystem (FS), umfassend Mittel zur Herstellung fluidischer Verbindungen (30), einen ersten und einen zweiten Einlass (10, 20), mindestens ein Druckerzeugungsmittel (40), eine Injektionsvorrichtung (50), zwei Vorratsbehälter (60, 70) für eine erste und eine zweite mobile Phase (65, 75) mit flüssigem Aggregatzustand, ein Auffanggefäß (80), einen Extraktor (90), einen Auslass (100) und ein Mittel geeignet zur Herstellung von zwei verschiedenen fluiden Verbindungszuständen (Schalteinheit, 110), **dadurch gekennzeichnet, dass**
- der erste Einlass (10) so ausgeführt ist, dass dem HFS unter Druck die erste mobile Phase (65) aus dem ersten Vorratsbehälter (60) über eine fluidische Verbindung zuführt werden kann;
- der erste Einlass (10) weiterhin mit einer Injektionsvorrichtung (50) fluidisch verbunden ist, wobei die Injektionsvorrichtung so ausgeführt ist, dass sie das Einbringen einer Mischung (120) aus flüssigem Probenmaterial (121) und darin suspendierten Mikropartikeln (122) in die durch den Einlass eingebrachte erste mobile Phase erlaubt;
- der zweite Einlass (20) so ausgeführt ist, dass dem HFS unter Druck die zweite mobile Phase (75) aus dem zweiten Vorratsbehälter (70) über eine fluidische Verbindung zuführt werden kann;
- der erste Einlass (10) mit einem ersten Eingang (E1) der Schalteinheit (110) und der zweite Einlass (20) mit einem zweiten Eingang (E2) der Schalteinheit fluidisch verbunden sind;
- der Extraktor (90) über einen Eingang (91) und einen Ausgang (92) verfügt, wobei der Eingang (91) des Extraktors mit einem ersten Ausgang (A1) der Schalteinheit fluidisch verbunden ist und der Ausgang (92) des Extraktors mit einem dritten Eingang (E3) der Schalteinheit fluidisch verbunden ist;
- der Extraktor ferner eine fluidisch verbindende Leitung (95) zwischen dem Eingang (91) und dem Ausgang (92) umfasst, ferner eine steuerbare Vorrichtung (96), mit der an zwei oder mehr hintereinander angeordneten Abschnitten (97) dieser Leitung zeitweilig ein lokales Magnetfeld angelegt werden kann;
- der zweite Ausgang (A2) der Schalteinheit (110) der Auslass (100) ist oder fluidisch mit dem Auslass (100) verbunden ist;
- der dritte Ausgang (A3) der Schalteinheit (110) mit dem Auffanggefäß (80) fluidisch verbunden ist; und
- die Schalteinheit (110) dazu geeignet ist, im ersten Verbidungszustand (I) E1 und A1, E2 und A2 sowie E3 und A3 fluidisch zu verbinden und im zweiten Verbidungszustand (II) E2 und A1, E3 und A2 sowie E1 und A3 fluidisch zu verbinden.

2. Vorrichtung gemäß Anspruch 1, **dadurch gekennzeichnet, dass** das FS ein Hochdruck-FS (HFS) ist, das HFS bevorzugt ein weitgehend geschlossenes System ist und der Auslass (100) mit einer Trenneinheit (130) und die Trenneinheit mit einem Detektor (140) fluidisch verbunden ist, und der Ausgang (145) des Detektors mit dem Auffanggefäß (80) fluidisch verbunden ist.

3. Vorrichtung gemäß Anspruch 2, **dadurch gekennzeichnet, dass** die Trenneinheit (130) eine Chromatografie-Säule ist.

4. Vorrichtung gemäß einem der Ansprüche 2 oder 3, **dadurch gekennzeichnet, dass** der Detektor (140) ausgewählt ist aus der Gruppe bestehend aus UV/Vis-Spektrometer, Diodenarray-Detektor, Lichtstreudetektor, Fluoreszenzdetektor, Brechungsindexdetektor, Massenspektrometer, Leitfähigkeitsdetektor, Elektrochemischer Detektor.

5. Vorrichtung gemäß einem der Ansprüche 1 bis 4, **dadurch gekennzeichnet, dass** die steuerbare Vorrichtung (96) des Extraktors (90) einen Elektromagneten umfasst.

6. Vorrichtung gemäß anspruch 5, **dadurch gekennzeichnet, dass** der Elektromagnet so angeordnet ist, dass das Magnetfeld auf zwei oder mehr nebeneinander angeordnete Abschnitte (97) der Leitung (95) zwischen Eingang (91) und Ausgang (92) des Extraktors (90) wirken kann.

7. Vorrichtung gemäß einem der Ansprüche 1 bis 6, weiterhin umfassend eine erste (65) und eine zweite (75) mobile Phase mit flüssigem Aggregatzustand.

8. Vorrichtung gemäß einem der Ansprüche 1 bis 7, weiterhin umfassend magnetische oder paramagnetische Mikropartikel (122).

9. Vorrichtung gemäß Anspruch 8, weiterhin umfassend flüssiges Probenmaterial.

10. Verwendung einer Vorrichtung gemäß einem der Ansprüche 1 bis 9 für die Manipulation von magnetischen Mikropartikeln und zwei verschiedenen mobilen Phasen mit flüssigem Aggregatzustand.

11. Methode zur Darstellung eines gereinigten Analyten aus einem komplexen flüssigen Probenmaterial enthaltend besagten Analyten, umfassend die Schritte
(a) Inkontaktbringen des flüssigen Probenmaterials (121) enthaltend den Analyten mit Mikropartikeln (122) aus einem magnetischen oder paramagnetischen Material mit einer funktionalisierten Oberfläche (123), wobei der Analyt an die Oberfläche adsorbiert; gefolgt von
(b) Einbringen des Probenmaterials mit den Mikropartikeln in eine Vorrichtung gemäß einem der Ansprüche 1 bis 9 unter Verwendung der Injektionsvorrichtung (50); gefolgt von
(c) Einpumpen einer ersten mobilen Phase (65) aus dem ersten Vorratsgefäß (60) in den ersten Einlass (10) der Vorrichtung, wobei die Schalteinheit (110) der Vorrichtung den Verbindungszustand (I) herstellt und im Extraktor (90) an dem ersten Abschnitt (97a) der darin befindlichen Leitung (95) ein Magnetfeld angelegt wird, das geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im ersten Abschnitt (97a) zu immobilisieren; gefolgt von
(d) Immobilisieren der Mikropartikel (122) im Extraktor (90) an der Innenwand (93) in dem ersten Abschnitt (97a) der Leitung; gefolgt von
(e) Trennen der Mikropartikel (122) vom übrigen Probenmaterial durch weiteres Einpumpen der ersten mobilen Phase (65) aus dem ersten Vorratsgefäß (60) in den ersten Einlass (10), wobei die immobilisierten Mikropartikel mit der ersten mobilen Phase gewaschen werden und das übrige Probenmaterial dem Auffangbehälter (80) zugeführt wird; gefolgt von
(f) Umschalten der Schalteinheit (110) in den Verbindungszustand (II) und Einpumpen einer zweiten mobilen Phase (75) aus dem zweiten Vorratsgefäß (70) in den zweiten Einlass (20) der Vorrichtung, wobei die zweite mobile Phase (75) geeignet ist, den adsorbierten Analyten von der Oberfläche der Mikropartikel (122) zu lösen; gefolgt von
(g) Eluieren des Analyten durch Inkontaktbringen der Mikropartikel (122) mit der zweiten mobilen Phase (75), wobei gleichzeitig das Magnetfeld vom ersten Abschnitt (97a) der Leitung (95) im Extraktor (90) abgeschwächt oder entfernt wird und die Mikropartikel (122) in der Leitung (95) durch die Bewegung der mobilen Phase (75) in Richtung eines zweiten Abschnitts (97b) der Leitung (95) bewegt werden;
(h) Anlegen eines Magnetfelds an dem zweiten Abschnitt (97b) der Leitung (95), wobei das Magnetfeld geeignet ist, in der durch die Leitung (95) gelangenden mobilen Phase enthaltene magnetische oder paramagnetische Mikropartikel (122) an der dem Magnetfeld nächst zugewandten Innenwand (93) der Leitung (95) im zweiten Abschnitt (97b) zu immobilisieren; gefolgt von
(i) Immobilisieren der Mikropartikel (122) an der Innenwand (93) in dem zweiten Abschnitt (97b) der Leitung; gefolgt von
(j) Bewegen der zweiten mobilen Phase mit dem eluierten Analyten zum Auslass (100) der Vorrichtung durch weiteres Einpumpen der zweiten mobilen Phase (75) aus dem zweiten Vorratsgefäß (70) in den zweiten Eingang (20), wodurch der Analyt am Auslass (100) gereinigt dargestellt wird.

12. Methode gemäß Anspruch 11, **dadurch gekennzeichnet, dass** in der Vorrichtung die Leitung (95) zwischen dem Eingang (91) und dem Ausgang (92) des Extraktors (90) helikal und mit n (n = 2 oder größer als 2) Windungen (99) ausgeführt ist, wobei n Abschnitte (97c) der Windungen und die jeweils zum Eingang (91) und Ausgang (92) führenden Abschnitte (97a, 97b) der Leitung nebeneinander angeordnet sind, das Magnetfeld auf die nebeneinander angeordnete Abschnitte der Leitung zwischen Eingang und Ausgang des Extraktors (97a, 97b, 97c) wirken kann, und Schritt (e) gefolgt wird von den Schritten (e') Waschen der Mikropartikel (122) durch weiteres Einpumpen der ersten mobilen Phase (65) in den ersten Einlass (10), wobei gleichzeitig das Magnetfeld an dem Abschnitt der Leitung im Extraktor, and dem die Mikropartikel immobilisiert sind, abgeschwächt oder entfernt wird und die Mikropartikel in der Leitung durch die Bewegung der mobilen Phase in Richtung des nächsten für eine Immobilisierung geeigneten Abschnitts bewegt werden; gefolgt von (e") erneutes Immobilisieren der Mikropartikel durch Anlegen eines Magnetfelds an den nächsten für eine Immobilisierung geeigneten Abschnitt der Leitung;
wobei (e') und (e") n-1 mal durchgeführt werden können.

13. Methode gemäß einem der Ansprüche 11 und 12, **dadurch gekennzeichnet, dass** das Probenmaterial eine biologische Flüssigkeit, eine Suspension mit biologischem Material oder ein Lysat von biologischem Material umfasst.

14. Methode zur Detektion eines Analyten in einem komplexen flüssigen Probenmaterial enthaltend besagten Analyten, umfassend die Schritte
(a) Bereitstellen einer Vorrichtung gemäß einem der Ansprüche 2 bis 9;
(b) Darstellung des gereinigten Analyten aus dem Probenmaterial unter Einsatz einer Methode gemäß einem der Ansprüche 21 bis 29, wobei der Analyt am Auslass (100) der Vorrichtung gereinigt dargestellt wird und die Schalteinheit (110) den Verbindungszustand (II) herstellt;
(c) Bewegen der zweiten mobilen Phase mit (i) dem Analyten und (ii) gegebenenfalls zusammen mit dem Analyt von den Mikropartikeln eluierten weiteren Substanzen durch die Trenneinheit (130) und in den Detektor (140), wobei die Bewegung getrieben wird durch Einpumpen der zweiten mobilen Phase (75) aus dem zweiten Vorratsgefäß (70) in den zweiten Eingang (20);
(d) Detektion des Analyten durch den Detektor (140).

15. Methode gemäß Anspruch 14, **dadurch gekennzeichnet, dass** Schritt (d) gefolgt wird von den Schritten
(e) Umschalten der Schalteinheit (110) in den Verbindungszustand (I);
(f) Abschwächen oder Entfernen des Magnetfelds im Extraktor (90);
(g) Einpumpen der ersten mobilen Phase (65) aus dem zweiten Vorratsgefäß (60) in den ersten Einlass (10), wobei die Mikropartikel (122) in Richtung des Auffanggefäßes (80) bewegt werden;
(h) Bewegen der Mikropartikel mit der ersten mobilen Phase in das Auffanggefäß.

16. Methode gemäß Anspruch 15, **dadurch gekennzeichnet, dass** die Mikropartikel im Auffanggefäß durch ein Magnetfeld immobilisiert werden.
